# EUROPÄISCHE PATENTANMELDUNG

(11) **EP 0 838 698 A2**
(43) Veröffentlichungstag der Anmeldung: **29.04.1998**
(21) Anmeldenummer: 97112249.4
(22) Anmeldetag: 17.07.1997
(51) Int. Cl.: G02B 5/20

(54) **Lichttransparentes, Wärmestrahlung reflektierendes Schichtensystem**

(30) Priorität: 24.10.1996 DE 19643550
(71) Anmelder: Leybold Systems GmbH, D-63450 Hanau am Main (DE)
(72) Erfinder: Liehr, Michael, Dr., 36325 Feldatal (DE); Lotz, Hans-Georg, Dr., 63584 Gründau (DE)

(57) **Zusammenfassung**

Bei einem lichttransparenten Schichtensystem (3,15) mit einem hohen Transmissionsgrad im sichtbaren Spektralbereich und einem hohen Reflexionsgrad im Wärmestrahlungsspektralbereich, welches auf einem Substrat (2) angeordnet ist, wobei das Schichtensystem (3,15) mindestens eine mit Fremdatomen dotierte, in Diamantstruktur auskristallisierte Kohlenstoffschicht (8,16) aufweist, ist die Kohlenstoffschicht (8,16) in Abhängigkeit der Dotierungskonzentration c_{A} der Fremdatome elektrisch leitfähig und weist eine niedrige Strahlungsemissivität im Wärmestrahlungsspektralbereich auf.

## Beschreibung

Die Erfindung betrifft ein Schichtensystem, das einen hohen Transmissionsgrad im sichtbaren Spektralbereich und eine hohen Reflexionsgrad im Wärmestrahlungsspektralbereich aufweist.

Gattungsgemäße Schichtsysteme werden im allgemeinen als "Low-E" (Low-Emissivity) bezeichnet. Derartige Schichtsysteme, welche z.B. auf Flachgläsern aufgebracht sind, dienen dazu, Licht im sichtbaren Spektralbereich durchzulassen, jedoch längerwellige Wärmestrahlung zu reflektieren. Bei Verwendung derartiger Flachgläser für Fensterverglasungen tragen diese somit vorteilhaft dazu bei, die Wärmeabstrahlung aus einem Raum durch verglaste Fensterflächen zu minimieren.

Herkömmliche Low-E-Schichtsysteme bestehen im Prinzip aus der folgenden Schichtenfolge:
Substrat / Metalloxyd / Metall / Metalloxyd.

Ein derartiges Low-E-Schichtsystem wird zum Beispiel in der DE 42 11 363 beschrieben. Die eigentliche Funktionsschicht stellt die Metallschicht dar, die aus Metallen mit sehr niedrigem Strahlungsemissions-Koeffizienten besteht. Üblicherweise besteht die Metallschicht aus Silber, Gold oder auch aus Kupfer bzw. Legierungen dieser Metalle. Die Metalloxydschichten dienen dem Zweck, als Antireflexschicht zu wirken und gleichzeitig die Metallschicht gegen mechanische und/oder chemische Umwelteinwirkungen zu schützen. Vorgesehen sind auch mehrlagige Schutzschichten, die das Beständigkeitsverhalten gegenüber Umwelteinflüssen gattungsgemäßer Low-E-Schichtensysteme erhöhen.

Auf Grund der zunehmenden hohen Anforderungen an die optischen und energetischen Parameter von Low-E-Schichtensysteme sowie deren geforderte Resistenz gegenüber Umwelteinwirkungen hat sich gezeigt, daß herkömmliche Schichtsysteme diesen Erfordernissen nicht mehr gerecht werden. Bekannt sind aus Indium-Zinn-Oxyd (ITO) bestehende, widerstandsfähige Schutzschichten, welche Emissivitätswerte zwischen 0,15 und 0,13 besitzen. Ein Nachteil der Verwendung derartiger ITO-Schichten aufweisender Low-E-Schichtensysteme ist, daß die großtechnische Herstellung, z.B. für Architekturglasanwendungen wegen des extrem hohen Materialpreises für Indium sehr teuer ist. Alternativ hierzu werden aus Zinnoxyd gefertigte Low-E-Schichten verwendet, die z.B. aus Kostengründen pyrolytisch auf dem Trägermaterial aufgebracht werden und einen Emissivitätswert von 0,4 besitzen.

Der Erfindung liegt die Aufgabe zu Grunde, ein Low-E-Schichtensystem der eingangs genannten Art zu schaffen, welches eine erhöhte Beständigkeit gegenüber chemischen und/oder mechanischen Einwirkungen aufweist und die Mängel der bekannten technischen Lösungen vermeidet.

Erfindungsgemäß wird diese Aufgabe durch ein Low-E-Schichtensystem gelöst, welches mindestens eine mit Fremdatomen dotierte, in Diamantstruktur auskristallisierte Kohlenstoffschicht aufweist, wobei die Strahlungsemissivität im Wärmestrahlungsspektralbereich und die elektrische Leitfähigkeit dieser Diamantschicht in Abhängigkeit der Dotierungskonzentration c_{A} der Fremdatome in der Kohlenstoffschicht einstellbar ist. Als Dotierungsmaterial wird gemäß Anspruch 2 eine Bor-Dotierung vorgeschlagen, wodurch die Diamantschicht p-Leitung aufweist. Die Verwendung erfindungsgemäßer, dotierter Diamantschichten für Low-E-Schichtensysteme weist den entscheidenden Vorteil auf, daß derartige Schichten eine geringe Emissivität im infraroten Spektralbereich einerseits, eine hohe Transparenz im visuellen Spektralbereich und darüber hinaus die für derartige Schichtsysteme gewünschten physikalischen und chemischen Eigenschaften, nämlich eine große Härte, hohe Abriebfestigkeit und damit eine chemische Beständigkeit gegenüber jeglichen Umwelteinflüssen miteinander vereinen. Durch die Erfindung wird insbesondere vorteilhaft ein Schichtensystem bereitgestellt, das vergleichbar niedrige Emissivitätswerte wie herkömmliche, auf Silberbasis hergestellte Low-E-Schichtensysteme aufweist, jedoch deren geringe Beständigkeit gegenüber Umwelteinflüssen vermeidet. Erfindungsgemäße Low-E-Schichtensysteme können so z.B. vorteilhaft auf Außenflächen von Glasfenstern eingesetzt werden. Durch diese neue Verwendungsmöglichkeit von Low-E-Schichtensystemen, nämlich auf Außenflächen von Glasfenstern, wird auch eine deutliche Herabsetzung des sogenannten U-Wertes erzielt. Unter dem U-Wert wird die thermische Leitfähigkeit einer Grenzfläche verstanden, die in SI-Einheiten die Einheit W/m²K besitzt, mit W: Energie, m²: Fläche, K: Temperatur in K. Die Fremdatomkonzentration in der Low-E-Diamantschicht beträgt erfindungsgemäß zwischen 10²⁰ Atome/cm³ und 10²² Atome/cm³ (siehe Anspruch 3). Mittels der Fremdatomkonzentration ist, wie in Anspruch 9 angegeben, die elektrische Leitfähigkeit der Diamantschicht einstellbar, wobei vorgeschlagen wird, den Flächenwiderstand der Diamantschicht zwischen 1 Ω/□ und 10 Ω/□ zu wählen.

Weiterhin wird vorgeschlagen, die erfindungsgemäße, dotierte Diamantschicht zwischen zwei hochreinen, nicht dotierten Diamantschichten einzubetten, so daß das Low-E-Schichtensystem insgesamt aus drei aufeinander auf einem Substrat angeordneten Schichten besteht.

Zur optischen Anpassung der Diamantschichten an das Substrat einerseits und an das umgebende Medium andererseits ist jeweils eine unmittelbar auf dem Substrat bzw. auf der obersten Diamantschicht anliegende Schicht vorgesehen, welche aus einem Metalloxyd, vorzugsweise aus mindestens einer der Verbindungen Zinkoxyd, Titandioxyd, Aluminiumoxyd, Siliziumdioxyd oder Zinnoxyd, wie in Anspruch 5 bzw. 6 aufgeführt, hergestellt ist. Die Gesamtschichtdicke d eines erfindungsgemäßen, mindestens drei Diamantschichten aufweisenden Schichtensystems beträgt maximal 1,5 µm. Die als optische Anpassungsschichten vorgesehenen Metalloxydschichten weisen Schichtdicken zwischen 0,05 µm und 0,2 µm auf. Alternativ wird vorgeschlagen, die Anpassungsschichten und/oder die unmittelbar benachbart an der dotierten Diamantschicht anliegenden Schichten aus C-BN, i.e. kubisches Bornitrid, zu fertigen.

Vorgeschlagen wird, die einzelne Diamantschichten aufweisenden Einzelschichten synthetisch herzustellen. Zur Herstellung eines erfindungsgemäßen, mindestens eine Diamantschicht als Low-E-Schicht aufweisenden Schichtensystems wird wie in Anspruch 12 angegeben, ein plasmachemisches Abscheidungsverfahren, vorzugsweise ein Chemical-Vapor-Deposition-Abscheidungsverfahren, i.e. CVD, vorgeschlagen. Bei derartigen Abscheideverfahren werden Diamantschichten aus der Gasphase unter Zugabe von atomarem Wasserstoff auf einem Substrat abgeschieden. Mit diesem Verfahren lassen sich auf Substraten abzuscheidende, geschlossene, polykristalline Diamantschichten synthetisch herstellen, die erfindungsgemäß als Low-E-Schichten verwendbar sind.

Weitere vorteilhafte Eigenschaften bevorzugter Ausführungsformen des Erfindungsgegenstandes sind in den auf den Hauptanspruch zurückbezogenen Unteransprüchen angegeben.

Nachfolgend werden zwei besonders vorteilhafte Low-E-Schichtsysteme gemäß der Erfindung dargestellt. Es zeigen:
- Figur 1: ein drei Einzelschichten umfassendes Low-E-Schichtensystem, aufgebracht auf einem Substrat;
- Figur 2: ein aus fünf Einzelschichten bestehendes Low-E-Schichtensystem auf einem Substrat.

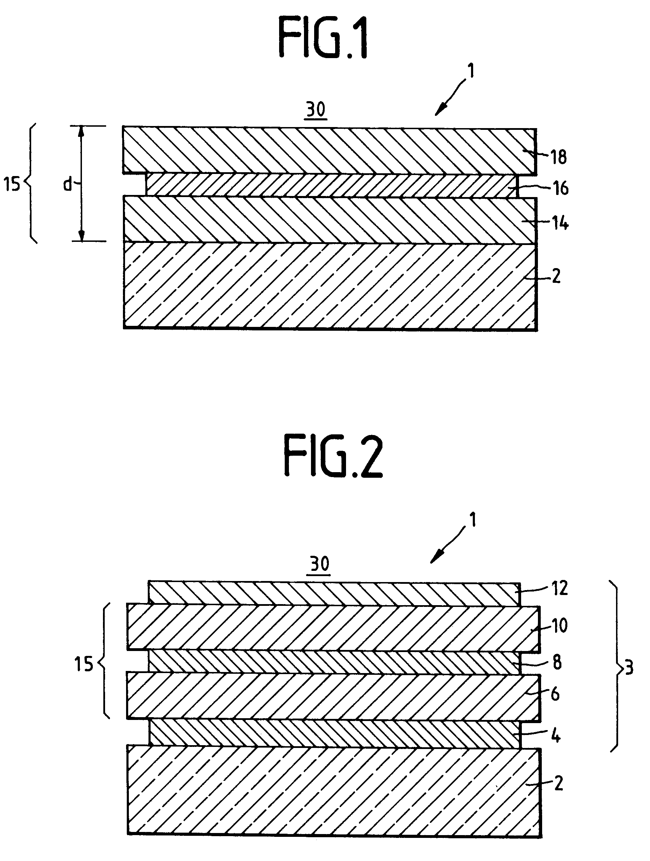

Das in Figur 1 dargestellte Low-E-Schichtsystem besteht aus insgesamt drei Einzelschichten, nämlich:
- einer ersten, auf einem Substrat 2 aufliegenden Schicht 14,
- einer zweiten, auf der Schicht 14 aufgebrachten, als Low-E-Schicht wirkenden, mit Fremdatomen dotierten Kohlenstoffschicht, welche in Diamantstruktur auskristallisiert ist und
- einer die Schicht 16 überdeckenden Schutzschicht 18.

Die Schichten 14 und 18 bestehen aus jeweils hochreinen, vorzugsweise polykristallinen, in Diamantstruktur kristallisierten Kohlenstoffschichten. Die Schichten 14,16,18 sind jeweils mittels eines CVD-Abscheideverfahrens auf dem Substrat 2 abgeschieden. Das Substrat 2 besteht aus einem lichttransparenten Glaskörper, z.B. einem Fensterglas.

Gemäß dem zweiten, in Figur 2 dargestellten Ausführungsbeispiel ist vorgesehen, das in Figur 1 dargestellte, die Diamantschichten 14,16,18 umfassende Schichtensystem 15 zwischen zwei als optische Anpassungsschichten wirkende Zwischenschichten 4,12 einzubetten. Das Low-E-Schichtensystem, wie in Figur 2 dargestellt, umfaßt insgesamt fünf Einzelschichten, nämlich:
- eine erste, auf dem Substrat 2 aufliegende Schicht 4,
- eine zweite, aus Diamant bestehende Schicht 6,
- eine dritte, Diamantstruktur aufweisende, mit Fremdatomen dotierte Kohlenstoffschicht 8,
- eine vierte, die Kohlenstoffschicht 8 bedeckende, hochreine Diamantschicht 10 und
- eine fünfte Schicht 12, die das Schichtensystem gegenüber dem umgebenden Medium abgrenzt.

Die als optische Anpassungsschichten vorgesehenen Zwischenschichten 4 und 12 bestehen aus Metalloxydverbindungen, z.B. aus TiO₂, Al₂O₃, SiO₂, SnO₂ oder ZnO. Die Schichtdicken der Anpassungsschichten 4 und 12 betragen zwischen 0,05 µm und 0,2 µm. Das aus den drei aufeinanderfolgenden Schichten 6,8,10 bzw. 14,16,18 bestehende Schichtensystem 15 weist insgesamt eine Schichtendicke von < 1,5 µm auf.

Die in Figur 1 bzw. Figur 2 dargestellten Low-E-Schichtsysteme sind z.B. als elektrisch leitfähiges Schichtensystem zum Einsatz bei Kfz-Scheiben verwendbar, wobei die leitfähigen Schichten mittels Stromdurchfluß als Ohmscher Widerstand erwärmbar sind und zur Enteisung der Kfz-Scheiben dienen. Weiterhin sind die dargestellten Schichtensysteme als elektromagnetische Felder abschirmende, lichttransparente Wand verwendbar.

Die in den Figuren 1 und 2 dargestellten Low-E-Schichtensysteme 15 bzw. 3 sind zum Auftrag auf Außenflächen von Architekturgläsern vorgesehen, welche z.B. in Klimazonen mit abrasiv auf Glasflächen einwirkenden Partikeln, wie z.B. Sand aufweisenden Windströmungen, einzusetzen sind oder welche durch intensive Reinigungsprozesse hohen chemischen und/oder physikalischen Belastungen ausgesetzt sind.

### Bezugszeichenliste

- 1: beschichtete Scheibe
- 2: Substrat
- 3: Schichtensystem
- 4: erste Schicht
- 6: zweite Schicht
- 8: dritte Schicht, dotierte Diamantschicht
- 10: vierte Schicht
- 12: Deckschicht
- 13: beschichtete Scheibe
- 14: erste Schicht
- 16: zweite Schicht, dotierte Diamantschicht
- 18: Deckschicht
- 30: umgebendes Medium, Atmosphäre
- d: Gesamtschichtdicke

## Patentansprüche

1. Lichttransparentes Schichtensystem (3,15) mit einem hohen Transmissionsgrad im sichtbaren Spektralbereich und einem hohen Reflexionsgrad im Wärmestrahlungsspektralbereich, welches auf einem Substrat (2) angeordnet ist, **dadurch gekennzeichnet**, daß das Schichtensystem (3,15) mindestens eine mit Fremdatomen dotierte, in Diamantstruktur auskristallisierte Kohlenstoffschicht (8,16) aufweist, wobei die Kohlenstoffschicht (8,16) in Abhängigkeit der Dotierungskonzentration c_{A} der Fremdatome elektrisch leitfähig ist und niedrige Strahlungsemissivität im Wärmestrahlungsspektralbereich aufweist.

2. Schichtensystem (3,15) nach Anspruch 1, **dadurch gekennzeichnet**, daß als Dotierungsmaterial Bor vorgesehen ist.

3. Schichtensystem (3,15) nach Anspruch 1 und/oder 2, **dadurch gekennzeichnet**, daß die Fremdatomkonzentration c_{A} zwischen 5x10²⁰ Atome/cm³ und 5x10²¹ Atome/cm³ beträgt.

4. Schichtensystem (3,15) nach mindestens einem der Ansprüche 1 bis 3, **gekennzeichnet durch**
- eine erste, auf dem Substrat (2) aufgebrachte, aus Kohlenstoff bestehende Schicht (14), welche Diamantstruktur aufweist;
- eine zweite, mit Fremdatomen dotierte, in Diamantstruktur kristallisierte Kohlenstoffschicht (16);
- und eine dritte, die zweite Schicht (16) bedeckende, aus Kohlenstoff bestehende Schicht (18), welche eine Diamantstruktur aufweist.

5. Schichtensystem (3) nach mindestens einem der Ansprüche 1 bis 4, welches auf einem lichttransparenten Substrat (2) angeordnet ist, **gekennzeichnet durch**
- eine auf dem Substrat (2) anliegende erste Schicht (4);
- eine auf der ersten Schicht (4) aufgebrachte, in Diamantstruktur auskristallisierte, aus Kohlenstoff bestehende zweite Schicht (6);
- eine dritte, mit Fremdatomen dotierte und Diamantstruktur aufweisende Kohlenstoffschicht (8), auf welcher
- eine vierte, aus Kohlenstoff bestehende, Diamantstruktur aufweisende Schicht (10) aufliegt;
- eine die vierte Schicht (10) bedeckende Schicht (12),
wobei die erste Schicht (4) und die Deckschicht (12) jeweils aus einem derartigen Material hergestellt ist, mit welchem eine optische Anpassung zwischen dem Glassubstrat (2) und der zweiten Schicht (6) einerseits und zwischen der vierten Schicht (10) und dem angrenzenden Medium (30) bewirkt wird.

6. Schichtensystem (3) nach Anspruch 5, **dadurch gekennzeichnet**, daß die Anpassungsschicht (4,12) aus mindestens einer der folgenden chemischen Verbindungen besteht: Zinkoxyd, Titandioxyd, Aluminiumoxyd, Siliziumdioxyd, Zinnoxyd.

7. Schichtensystem (15) nach mindestens einem der Ansprüche 1 bis 6, **gekennzeichnet durch** eine Gesamtschichtdicke von d ≤ 1,5 µm.

8. Schichtensystem (3) nach mindestens einem der Ansprüche 5 bis 7, **dadurch gekennzeichnet**, daß die Anpassungsschichten (4,12) jeweils eine Schichtdicke zwischen 0,05 µm und 0,2 µm besitzen.

9. Schichtensystem (3,15) nach mindestens einem der Ansprüche 1 bis 8, **dadurch gekennzeichnet**, daß die Fremdatomkonzentration c_{A} der dotierten Diamantschicht (8,16) derartig gewählt ist, daß der elektrische Flächenwiderstand ζ 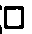 der Diamantschicht (8,16) zwischen 1 Ω/□ und 10 Ω/□ beträgt.

10. Schichtensystem (3,5) nach mindestens einem der Ansprüche 1 bis 9, **dadurch gekennzeichnet**, daß die Schichten (4,6,10,12;,14,18) aus kubischem Bornitrid bestehen.

11. Verwendung eines Schichtensystems (3,15) nach mindestens einem der vorhergehende Ansprüche, welches auf einem lichttransparenten Substrat (2) aufgebracht ist als Low-E-Schicht.

12. Verfahren zur Herstellung eines Schichtensystems (3,15) nach Anspruch 1 oder Anspruch 5, **dadurch gekennzeichnet**, daß die Schichten (6,8,10;14,16,18) mittels eines plasmachemischen Abscheideverfahrens, vorzugsweise mittels eines Chemical-Vapor-Deposition-Verfahrens hergestellt werden.
